(19) Europäisches Patentamt
European Patent Office
Office européen des brevets

(11) **EP 3 089 117 A1**

(12) **EUROPÄISCHE PATENTANMELDUNG**

(43) Veröffentlichungstag:
02.11.2016   Patentblatt 2016/44

(51) Int Cl.:
*G07C 5/08* (2006.01)   *G01P 1/12* (2006.01)

(21) Anmeldenummer: 15465513.8

(22) Anmeldetag: **29.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Continental Automotive GmbH**
**30165 Hannover (DE)**

(72) Erfinder:
• **Barbu, Tudor**
**300456 Timisoara (RO)**
• **Goron, Gabriel**
**300003 Timisoara (RO)**

• **Lorincz, Zoltan**
**417078 Santion, Bihor (RO)**
• **Pascu, Cosmin**
**307160 Dumbravita (RO)**
• **Pela, Emanuel**
**320110 Resita (RO)**
• **Podaru, Iulian**
**300473 Timisoara (RO)**
• **Sabau, Sebastian**
**300514 Timisoara (RO)**

(74) Vertreter: **Büchner, Jörg**
**Conti Temic microelectronic GmbH**
**Sieboldstr. 19**
**90411 Nürnberg (DE)**

(54) **VERFAHREN ZUR AUFZEICHNUNG VON FAHRZEUGSENSORDATEN**

(57)   Es wird ein Verfahren zur Aufzeichnung von Fahrzeugsensordaten vorgestellt, wobei Sensordaten des Fahrzeugs, zumindest die Beschleunigung, gemessen und deren Wert oder eine daraus abgeleitete Größe in einem Speicher gespeichert werden.

Dabei wird die Beschleunigung in Hochachse des Fahrzeugs über eine vorgegebene Zeitdauer und/oder Fahrtstrecke erfasst, daraus eine daraus abgeleitete Größe, insbesondere ein gemittelter Wert bestimmt und abgespeichert. Zudem wird vorzugsweise der Maximalwert der Beschleunigung in Hochachse über eine vorgegebene Zeitdauer und/oder Fahrtstrecke erfasst und ebenfalls mit abgespeichert. Darüber hinaus kann daraus ein Alterungswert über die gesamte Fahrzeuglaufdauer hinweg bestimmt werden.

EP 3 089 117 A1

**Beschreibung**

Die Erfindung betrifft ein Verfahren zur Aufzeichnung von Fahrzeugsensordaten gemäß dem Oberbegriff von Anspruch 1.

Aus der DE 10 2009 023 639 A1 ist beispielsweise ein digitales Fahrtenbuch zu entnehmen, welches zyklisch Position und Zeit des Fahrzeuges erfassen. Die Menge der hierbei zu erfassenden Daten ist äußerst groß und entsprechende Speicher entsprechend teuer. Die Alterung des Fahrzeugs und der Verschleiß lassen sich daraus jedoch nur sehr unvollständig ableiten.

Darüber hinaus sind beispielsweise aus der DE 29705 400 A1 oder DE 198 27622 A1 oder WO 2000 700 4452 A1 so genannte Unfalldatenschreiber, auch Crash-Datenrekorder genannt, zur Aufzeichnung von Fahrzeugsensordaten während eines Unfalls bekannt. Dabei werden zumindest langfristig nur jene Daten gespeichert und gegebenenfalls vorab gespeicherte Daten ansonsten wieder überschrieben, wenn es tatsächlich zu einem Unfall kommt. Dadurch kann der Speicher entsprechend kleiner ausgebildet werden, bietet jedoch auch deutlich weniger Information über die Lebensgeschichte des Fahrzeugs und ebenfalls keine Aussage über die Alterung des Fahrzeugs abzuleiten.

Die Aufgabe der vorliegenden Erfindung ist es, ein verbessertes Verfahren zur Aufzeichnung von Fahrzeugsensordaten vorzustellen. Diese Aufgabe wird durch die Merkmale der unabhängigen Ansprüche gelöst. Vorteilhafte Weiterbildungen der Erfindung ergeben sich aus den Unteransprüchen, wobei auch Kombinationen und Weiterbildungen einzelner Merkmale miteinander denkbar sind.

Ein wesentlicher Gedanke der Erfindung besteht darin, dass die Beschleunigung in Hochachse des Fahrzeugs über eine vorgegebene Zeitdauer und/oder Fahrtstrecke eine sehr signifikante Größe für atypische Verkehrsereignisse, starke Erschütterungen oder gar Unfälle ist. Daraus wird eine abgeleitete Größe, insbesondere ein gemittelter Wert bestimmt und abgespeichert. So ist in einem Ausführungsbeispiel vorgesehen, dass alle 4 ms der Mittelwert der Beschleunigung in Hochachse bestimmt wird. Um diesen Wert jedoch nicht alle 4 ms speichern zu müssen, wird fortschreitend daraus ein Alterungswert bestimmt.

Vorzugsweise wird zudem der Maximalwert der Beschleunigung in Hochachse über eine vorgegebene Zeitdauer und/oder Fahrtstrecke erfasst und ebenfalls mit abgespeichert. Dabei kann der Maximalwert aber über einen relativ großen Zeitabschnitt oder eine relativ große zurückgelegte Entfernung, beispielsweise alle 10 km nur gespeichert bzw. berücksichtigt werden, beispielsweise auch in den bereits beschriebenen Alterungswert eingehen.

So ist beispielsweise folgende Formel vorgesehen:

$$AV := (EAV * (OV/10-1) + MAX)/OV/10$$

wobei AV der neue Alterungswert
EAV der bisherige Alterungswert von vor 10km
OV der Kilometerstand ist.

Vorzugsweise werden jedoch zudem die Beschleunigung in Längsachse und oder Querachse des Fahrzeugs ebenfalls über eine vorgegebene Zeitdauer und/oder Fahrtstrecke erfasst, daraus zumindest eine daraus abgeleitete Größe, insbesondere ein gemittelter Wert und/oder Maximalwert bestimmt und abgespeichert bzw. im Alterungswert mit berücksichtigt.

Über das Fortschreiten über die gesamte Laufdauer des Fahrzeugs hinweg wird also ein Alterungswert des Fahrzeugs ausgehend von den gemittelten Werten und/oder Maximalwerten über eine vorgegebene Zeitdauer und/oder Fahrtstrecke bestimmt.

Zur Umsetzung dieses Verfahrens ist in im Kraftfahrzeug daher ein Fahrzeugdatenaufzeichnungseinheit mit einem Steuerprogramm zur Durchführung Verfahren nach einem der vorangehenden Ansprüche vorgesehen.

**Patentansprüche**

1. Verfahren zur Aufzeichnung von Fahrzeugsensordaten, wobei Sensordaten des Fahrzeugs, zumindest die Beschleunigung, gemessen und deren Wert oder eine daraus abgeleitete Größe in einem Speicher gespeichert werden, **dadurch gekennzeichnet, dass** die Beschleunigung in Hochachse des Fahrzeugs über eine vorgegebene Zeitdauer und/oder Fahrtstrecke erfasst, daraus eine daraus abgeleitete Größe, insbesondere ein gemittelter Wert bestimmt und abgespeichert wird.

2. Verfahren nach Anspruch 1 **dadurch gekennzeichnet, dass** zudem der Maximalwert der Beschleunigung in Hochachse über eine vorgegebene Zeitdauer und/oder Fahrtstrecke erfasst und ebenfalls mit abgespeichert wird.

3. Verfahren nach Anspruch 2, **dadurch gekennzeichnet, dass** zudem die Beschleunigung in Längsachse und oder Querachse des Fahrzeugs über eine vorgegebene Zeitdauer und/oder Fahrtstrecke erfasst, daraus eine daraus abgeleitete Größe, insbesondere ein gemittelter Wert und/oder Maximalwert bestimmt und abgespeichert wird.

4. Verfahren nach einem der vorangehenden Ansprüche, **dadurch gekennzeichnet, dass** Fortschreiten über die gesamte Laufdauer des Fahrzeugs hinweg ein Alterungswert des Fahrzeugs ausgehend von den gemittelten Werten und/oder Maximalwerten über eine vorgegebene Zeitdauer und/oder Fahrtstrecke bestimmt wird.

5. Fahrzeugdatenaufzeichnungseinheit hergerichtet mit einem Steuerprogramm zum Durchführen des Verfahrens nach einem der vorangehenden Ansprüche.

Europäisches
Patentamt

European
Patent Office

Office européen
des brevets

## EUROPÄISCHER RECHERCHENBERICHT

Nummer der Anmeldung

EP 15 46 5513

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 059 508 A1 (DATA TEC CO LTD [JP]; TOKIO MARINE RISK CONSULTING C [JP]) 13. Dezember 2000 (2000-12-13) * Zusammenfassung * * Absatz [0031] - Absatz [0039] * * Absatz [0043] - Absatz [0058] * * Abbildungen 1,4-10 * ----- | 1-5 | INV. G07C5/08 G01P1/12 |
| X | WO 2013/160908 A2 (TATA CONSULTANCY SERVICES LTD [IN]) 31. Oktober 2013 (2013-10-31) * Zusammenfassung * * Seite 4, Zeile 21 - Seite 5, Zeile 11 * * Seite 7, Zeile 26 - Seite 9, Zeile 23 * * Seite 12, Zeile 15 - Seite 14, Zeile 4 * * Abbildungen * ----- | 1,3,5 | |
| A | CA 2 689 744 A1 (NEW FLYER IND CANADA ULC [CA]) 8. Juli 2010 (2010-07-08) * Zusammenfassung * * Absatz [0004] - Absatz [0008] * * Absatz [0025] - Absatz [0027] * * Absatz [0037] * * Absatz [0040] - Absatz [0042] * * Tabelle 1 * * Abbildung 1 * ----- | 1-5 | **RECHERCHIERTE SACHGEBIETE (IPC)** G07C G01P |
| A | EP 2 863 282 A1 (TATA CONSULTANCY SERVICES LTD [IN]) 22. April 2015 (2015-04-22) * Zusammenfassung * * Absatz [0008] * * Absatz [0015] * * Absatz [0018] * * Absatz [0022] - Absatz [0024] * * Absatz [0031] - Absatz [0032] * * Abbildungen * ----- | 1,5 | |

Der vorliegende Recherchenbericht wurde für alle Patentansprüche erstellt

| Recherchenort | Abschlußdatum der Recherche | Prüfer |
|---|---|---|
| Den Haag | 29. September 2015 | Van der Haegen, D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .......................................................................................
& : Mitglied der gleichen Patentfamilie, übereinstimmendes
    Dokument

EPO FORM 1503 03.82 (P04C03)

# EP 3 089 117 A1

## ANHANG ZUM EUROPÄISCHEN RECHERCHENBERICHT
## ÜBER DIE EUROPÄISCHE PATENTANMELDUNG NR.

EP 15 46 5513

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2015

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1059508 | A1 | 13-12-2000 | CN | 1290340 | A | 04-04-2001 |
| | | | DE | 69937141 | T2 | 19-06-2008 |
| | | | EP | 1059508 | A1 | 13-12-2000 |
| | | | JP | 3044025 | B1 | 22-05-2000 |
| | | | JP | 2000171267 | A | 23-06-2000 |
| | | | US | 6438472 | B1 | 20-08-2002 |
| | | | WO | 0034742 | A1 | 15-06-2000 |
| WO 2013160908 | A2 | 31-10-2013 | EP | 2828781 | A2 | 28-01-2015 |
| | | | US | 2015051785 | A1 | 19-02-2015 |
| | | | WO | 2013160908 | A2 | 31-10-2013 |
| CA 2689744 | A1 | 08-07-2010 | CA | 2689744 | A1 | 08-07-2010 |
| | | | US | 2010174576 | A1 | 08-07-2010 |
| | | | US | 2014095047 | A1 | 03-04-2014 |
| EP 2863282 | A1 | 22-04-2015 | AU | 2014203709 | A1 | 29-01-2015 |
| | | | EP | 2863282 | A1 | 22-04-2015 |
| | | | US | 2015019067 | A1 | 15-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009023639 A1
- DE 29705400 A1
- DE 19827622 A1
- WO 20007004452 A1